# EUROPEAN PATENT SPECIFICATION

(11) **EP 1 833 335 B1**
(45) Date of publication and mention of the grant of the patent: **28.07.2010**
(21) Application number: 05812955.2
(22) Date of filing: 03.11.2005
(51) Int. Cl.: A47J 31/40, A47J 31/06

(54) **DEVICE FOR THE AUTOMATIC EJECTION OF THE TABLETS USED TO FEED THE MACHINES THAT DISPENSE COFFEE OR SIMILAR DRINKS**
VORRICHTUNG ZUR AUTOMATISCHEN AUSSTOSSUNG VON TABLETTEN FÜR MASCHINEN ZUR AUSGABE VON KAFFEE UND ÄHNLICHEN GETRÄNKEN
DISPOSITIF POUR L'EJECTION AUTOMATIQUE DES TABLETTES UTILISEES POUR CHARGER LES MACHINES DISTRIBUANT DU CAFE OU DES BOISSONS SIMILAIRES

(30) Priority: 05.11.2004 IT RM20040173 U; 05.05.2005 IT RM20050057 U
(43) Date of publication of application: 19.09.2007
(73) Proprietor: Espressaroma S.p.A-, 00155 Roma (IT)
(72) Inventor: PALOMBINI, Stefano, I-00155 Roma (IT)
(74) Representative: Sneider, Massimo
(86) International application number: PCT/IT2005/000638
(87) International publication number: WO 2006/048912

(56) References cited:
- US-A- 6 079 315

## Description

### State of the art

It is a number of years since electric machines dispensing coffee or similar drinks are present on the market for home or small-community use.

Most machines on the market substantially comprise:
- a tank to store water
- an electric pump
- a heater through which the water passes
- a filter-holding unit that houses the coffee powder or the tablet filled with coffee or any other substance needed to obtain the hot drink, for instance coffee, tea, chamomile, etc.

Typically, these machines work as specified below. When the machine is turned on, an electric resistance causes the heating unit to reach the right temperature and, usually, this is signaled by a warning light. When the operating temperature is reached, the filter holder is loaded with the ground coffee or the tablet, or another substance, and placed in a stable though removable manner in the heating unit, usually through a bayonet fitting or a similar device. Afterwards, the activation of the pump causes the water to pass through the heating unit and to penetrate the substance held in the filter or in the tablet, generating the hot drink that comes out from a special nozzle placed at the base of the filter-holder.

The aforementioned operation has been put to the test and is sufficiently reliable, although it features the bothersome inconvenience of having to empty the filter or the pod holder after having obtained the drink.

In case the filter is filled with the substance in powder form, for instance coffee powder, the only solution to empty it is to extract the filter holder, to turn it upside down and, banging it slightly, to cause the separation of the wet and compressed powder. This operation is not at all easy and clean and is poorly suited for carrying it out when the machines are installed in small communities and offices. Whenever the filter holder accommodates a tablet, the removal of the latter proves hard owing to the joint action of heat-pressure water to which the tablet is subjected during the preparation of the drink; this joint action tends to cause the tablet to stick to the outer surface of the heater-dispenser against which the tablet is pushed by the filter-holder. In order to remove the filter, one generally needs to cause its detachment from the outer surface of the heater-dispenser using a knife or a similar device, or else to attempt its removal with one's fingers with the risk of getting them burnt.

A few coffee-machine manufacturers solved the problem through the design of special coffee machines that adopt substance-holding elements made up by small rigid cylinders, mostly made out of plastic, that are punctured by the machine prior to the supply of the drink and ejected from the filter holder by means of mechanical systems after the drink has been dispensed, for instance, at the time of the subsequent loading or immediately after the distribution of the drink.

In any event, the solution concisely described above does not allow the recourse to standard tablets made with filter-paper and complicates the operation of the machine that may be more easily subject to damages.

Document US-A-6079315 discloses a device according to the preamble of independent claim 1.

### Description of the invention

An initial purpose of this invention is to realize mechanical systems that are able to facilitate or cause the ejection of the tablet used in the tablet-holding cup of an electrical machine for making coffee or other drinks.

A second purpose of this invention is to obtain, having recourse to one of the mechanical systems referred to above, also the lowering of the tablet-holding cup down to the height needed to permit the entry of the tablet into the said cup.

A third purpose of this invention is to obtain, having recourse to one of the mechanical systems referred to above, the positioning of the tablet-holding cup in contact with the heating unit, with the pressure required to ensure the tightness between the tablet-holding cup and the heating unit during the operation of the pump for the supply of the drink.

According to this invention, the purposes referred to above are attained by means of a mechanism that moves in a vertical direction the filter-holder, which is fitted integrally to a rotating shaft integral with a support having a square-bracket-shaped plan; the support may slide along two vertical axes passing through suitable holes provided on its sides. The mechanism, which is driven by a lever, or a knob, or an electric motor, through suitable compound levers permits to move the filter holder from an upper dead point to a lower dead point and vice versa. While shifting from the upper dead point -which coincides with the seat that must accommodate the filter holder in the heater for dispensing coffee- to the lower dead point, a rod having an inclination with respect to the vertical axis approximating 45°, fixed onto the rotating shaft onto which the filter holder is fitted integrally, meets a vertical rafter and is pushed by the latter towards the top, causing a rotation of the filter holder of 45° or more, so that the used filter comes out and falls away from the filter holder.

The filter holder is brought back in its position for use by elastic means, for instance a spring that acts on the shaft onto which the filter holder is fitted flush. Reversing the direction of rotation of the shaft that is integral with the compound levers, the rod having a 45° inclination breaks free of the rafter push and, thanks to the action of the spring, goes back to the horizontal position. This occurs at such a distance from the heater-dispenser as to allow the positioning of a new pod.

In a different version of the system described above, there is a mechanism for moving the filter that allows an even more effective ejection of the pod. In this solution, the filter is fixed onto a pin sliding inside a guide; when the filter has a 45° inclination with respect to the horizontal position, the pin knocks against a pushing element that drives the filter from its seat and favors the drop or removal of the used pod.

### Short description of the drawings

The invention is going to be described with reference to the drawings in a preferred but not limitative solution for its realization, where:

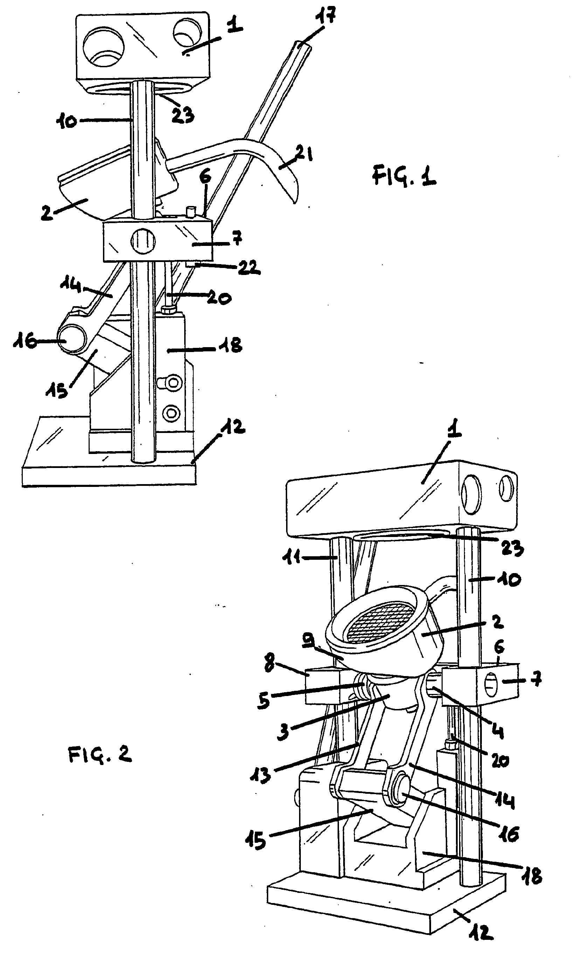

Figure 1 shows an axonometric side view of the overall device for the vertical movement, the filter inclination and the ejection of the pod.
Figure 2 shows a 3/4^{th} back view of the device in the phase shown in figure 1.
Figure 3 shows an axonometric side view of the device referred to in this invention, with the filter holder in a fully tilted position.
Figure 4 shows a 3/4^{th} back view of the device referred to in this invention, with the filter holder in a fully tilted position.
Figure 5 shows a side view of the device referred to in this invention, with the filter holder in the horizontal loading position.
Figure 6 shows a side view of the device referred to in this invention, with the filter holder in the drink-dispensing position.

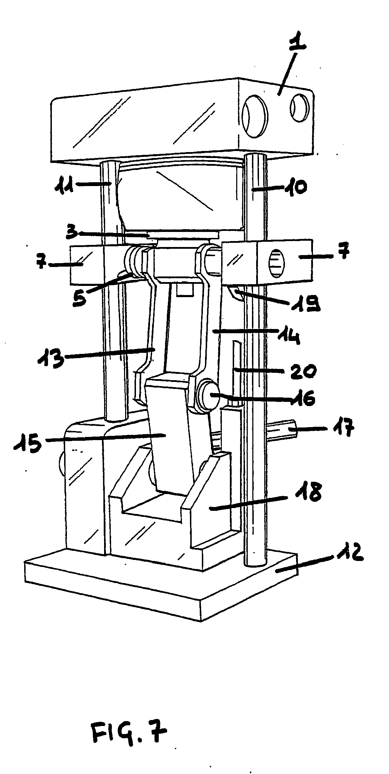

Figure 7 shows a 3/4^{th} back view of the device referred to in this invention, with the filter holder in the drink-dispensing position.

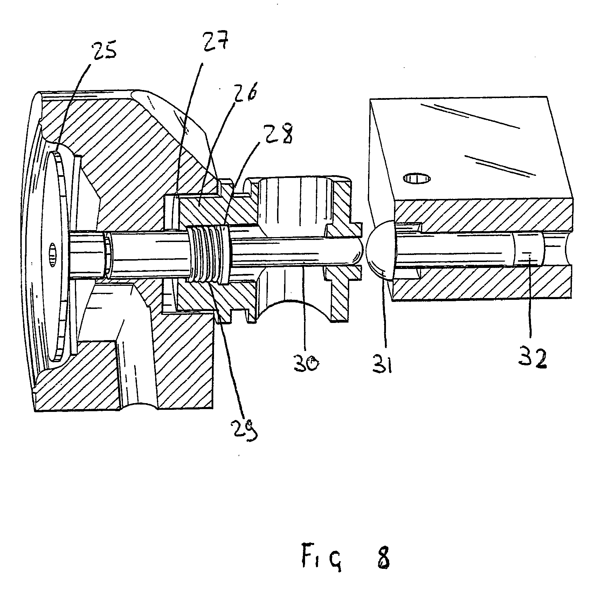

Figure 8 shows an axonometric cross-section of the pod ejecting device.

### Description of a preferred realization

With reference to the said figures, the device in a preferred form of realization comprises:
- a heater-dispensing unit (1);
- a filter-holding unit (2) integral in the lower part with a cylindrical support (3) centered on the perpendicular axis passing through the center of the filter-holding unit (2);
- a cylindrical pin (4) at right angles to the vertical axis passing through the center of the filter-holding unit (2), onto which the base of the filter-holding unit is fitted integrally;
- a support (6) having a square-bracket-shaped plan, in the two arms (7 and 8) of which there are two seats which accommodate the ends of the cylindrical pin (4); the said arms (7 and 8) present through holes (9);
- two vertical guides (10 and 11) that pass through the through holes (9) of the support (6); the upper ends of the said guides (10 and 11) are integral with the lower side of the heating unit (1) and the lower ends of the said guides (10 and 11) are integral with the base (12);
- two levers (13 and 14), the upper ends of which have their fulcrum in the pin (4), while the lower ends of the said levers have their fulcrum in (16) at the upper end of the sides of a parallelepipedal-shaped element (15); the lower end of the element (15) is integral with a rotating axis having its fulcrum in the shaped support (18) and is operated by the lever (17) or by a knob or a motor or a similar device;
- a small rod (19), having an inclination with respect to the vertical axis approximating 45°, fixed onto the pin (4) onto which the filter holder (2) is fitted integrally;
- a vertical rafter (20) integral with the base (18),
   positioned such that of the tilted rod (19) during a downward shift comes in contact with the vertical rafter (20);
- a spring holding on the pin (4).

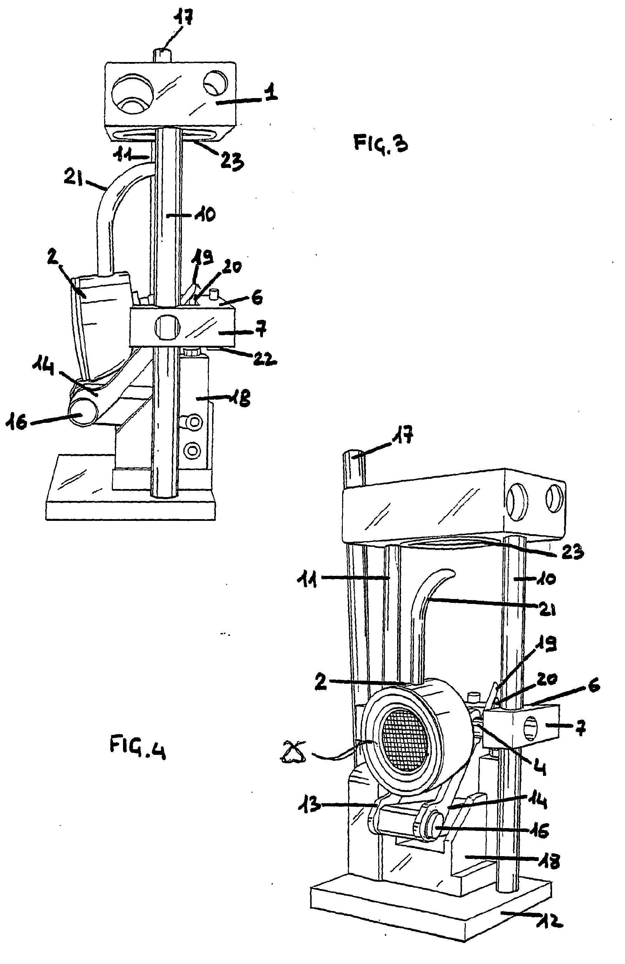

The operation of the lever, or the operation of the knob, in one direction causes the inclination of the element (15) and the levers (13 and 14) towards the base of the device, with the consequent downward shift of the support (6) that, as previously pointed out, slides along the guides (10 and 11). During this downward shift, the tilted rod (19), integral with the pin (4), comes in contact with the vertical rafter (20) that pushes it upward causing the rotation of the rotating pin (4) onto which the filter holder (2) is fixed, causing the filter holder (2) to rotate in excess of 45° (figures 3 and 4), with the consequent drop of the pod held in the filter holder.

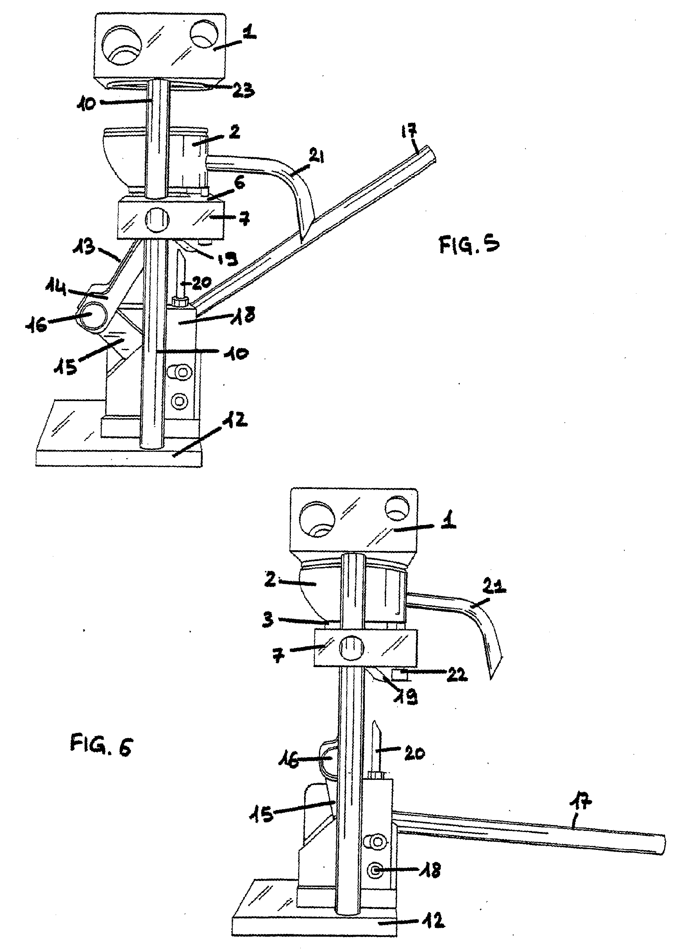

Clearly, the movement of the lever (17) in the opposite direction causes a reverse movement, meaning an upward shift of the element (15) and the levers (13 and 14) that, releasing the tilted rod (19) from its contact with the rafter (20), allows the spring (5), integral with the pin (4), to move the filter holder (2) back to a horizontal position (figure 5), allowing the placement of a new pod in the filter holder. The continuation of the movement of the lever (17) to the limit stop causes the element (15) and the levers (13 and 14) to align along the vertical axis that is parallel to the vertical guides (10 and 11).

The total height of all the elements described above, which allow the movement of the filter holder (2), and of the filter holder (2) is calculated so as to be just a few millimeters more that the distance existing between the seat (23) present in the heating-dispensing unit (1) and the lower fulcrum of the element (15) so that, when the elements that allow the movement are aligned along the perpendicular that is parallel to the guides (10 and 11), the filter holder (2) is vigorously pushed into the seat (23), ensuring its tightness to the pressure of the hot water present while the drink is dispensed and keeping firmly this position.

The position of the filter holding unit may be adjusted in height with suitable means such as, for instance, a screw joint and an adjusting screw (22), to allow an easy compensation of any tightness loss due to the gasket wear.

In the example of the realization described above, the movement of the mechanism that permits to lower, tilt and position the filter holder in contact with the heating-dispensing unit is activated by means of the lever (17), but the lever may be replaced by an electric motor controlled by one or more push buttons that allow the filter holder to reach and maintain the required positions.

As previously pointed out, in order to make the ejection of the pod after its use even safer, the described device is completed by an ejection device that affects the position of the filter within the filter holder. The ejection device is made up by:
- a pin (24), integral with the bottom of the filter (25), that features a ledge element (28);
- a seat (26) that features an upper ledge element (27) that houses the pin (24);
- a spring (29) inserted in the pin (24) between the ledge elements (28) and (25);
- a second pin (30) having a smaller diameter that the pin (24), integral with the said pin (24);
- a hold-up pin (31), fixed to the support (32) in an adjustable manner.

In substance, when the maximum rotation of the filter holder is reached having recourse to the device described above, which allows a rotation of the filter holder in excess of 45°, the pin (30) sliding for a fixed length in the seat (26) contrasts the hold-up pin (31) and is subjected to a forward shift that causes the filter (25) to come out of the filter holder (2) for a fixed length, facilitating in so doing the ejection of the pod.

As pointed out, the hold-up pin (31) features a lower threading that allows the adjustment of the distance of its exit from the support (32). When the filter holder is brought back in the horizontal position, the contrast between the pin (30) and the hold-up pin (31) ceases and, thanks to the spring (29), the filter (35) returns to its proper seat.

## Claims

1. Device for the automatic ejection of the tablets used to feed the machines for making coffee and similar drinks which comprises:
- a heater-dispensing unit (1);
- a filter-holding unit (2) integral in the lower part with a cylindrical support (3) centered on the perpendicular axis passing through the center of the filter-holding unit (2);
- a cylindrical pin (4) at right angles to the vertical axis passing through the center of the filter-holding unit (2), onto which the base of the filter-holding unit is fitted integrally;
- a support (6) having a square-bracket-shaped plan, in the two arms (7 and 8) of which there are two seats which accommodate the ends of the cylindrical pin (4); the said arms (7 and 8) present through holes (9); **characterised in that** it further comprises
- two vertical guides (10 and 11) that pass through the through holes (9) of the support (6); the upper ends of the said guides (10 and 11) are integral with the lower side of the heating unit (1) and the lower ends of the said guides (10 and 11) are integral with the base (12);
- two levers (13 and 14), the upper ends of which have their fulcrum in the pin (4), while the lower ends of the said levers have their fulcrum in (16) at the upper end of the sides of a parallelepipedal-shaped element (15); the lower end of the element (15) is integral with a rotating axis having its fulcrum in the shaped support (18) and is operated by the lever (17) or by a knob or a motor or a similar device;
- a small rod (19), having an inclination with respect to the vertical axis approximating 45°, fixed onto the pin (4) onto which the filter holder (2) is fitted integrally;
- a vertical rafter (20) integral with the base (18), positioned such that the tilted rod(19) during a downward shift comes in contact with the vertical rafter(20);
- a spring holding on the pin (4).

2. Device, according to claim 1, **characterized by** the fact that the operation of the lever (17) in a direction causes an inclination of the arms (13 and 14), the lowering of the filter holder (2), the contrast between the tilted rod (19) and the rafter (20), with the consequent inclination of the filter holder (2) in excess of 45° with respect to a horizontal line.

3. Device, according to claim 1, **characterized by** the fact that the spring (5) takes the filter holder (2) back to the horizontal position as soon as there is no longer any contrast between the tilted rod (19) and the rafter (20).

4. Device, according to claim 1, **characterized by** the fact that it is provided with a device for the partial extraction of the filter from the filter holder, comprising:
- a pin (24), integral with the bottom of the filter (25), that features a ledge element (28);
- a seat (26) that features an upper ledge element (27) that houses the pin (24);
- a spring (29) inserted in the pin (24) between the ledge elements (28) and (25);
- a second pin (30) having a smaller diameter that the pin (24), integral with the said pin (24);
- a hold-up pin (31), fixed to the support (32) in an adjustable manner.

5. Device, according to claim 4, **characterized by** the fact that when the filter holder (2) reaches the position of maximum rotation, the pin (30) sliding in the seat (26) contrast the hold-up pin (31) and is subjected to a forward shift that causes the filter (25) to come out of the filter holder (2) for a fixed length

6. Device, according to claim 4, where the exit of the hold-up pin (31) is adjustable thanks to a threading (32) present on the stem.

7. Device, according to claim 1, where the lever (17) is operated by a motor.

8. Device, according to claim 1, where the lever (17) is operated by a knob.

## Patentansprüche

1. Einrichtung für den automatischen Auswurf von Siegeloblaten, die benutzt werden, um die Kaffee- und ähnliche Getränkemaschinen zu speisen, versehen mit :
einer Wärmeverteiler-Einheit (1),
einer Lagerung des integralen Filters (2) im unteren Teil eines zylindrischen Lagers (2),
zentriert auf der senkrechten Achse über die Mitte der Einheit, die den Filter (2) enthält,
einem Walzenzapfen (4) an den rechten Winkeln der senkrechten Achse, der sich durch die Mitte der Einheit erstreckt, die den Filter enthält, auf deren Basis die Einheit vollständig montiert ist,
die den Filter enthält,
ein Lager (6) mit einer Auflageplatte in Form einer viereckigen Konsole und zwei Armen (7 u.8), die zwei Sitze für die Endbereiche des Walzenzapfens (4) enthalten, wobei die Arme (7 u.8) mit Bohrungen (9) versehen sind,
Einrichtung, die sich **dadurch** auszeichnet, daß sie auch folgendes umfaßt :
zwei vertikale Führungen (10 u.11), die sich durch die Bohrungen (9) des Lagers (6) erstrecken; die oberen Endbereiche besagter Führungen (10 u.11) sind ein Ganzes mit der Unterseite der Wärmeeinheit (1) und die unteren Endbereiche der Führungen (10 u.11) mit der Basis (12);
zwei Hebel (13 u.14), deren obere Endbereiche ihren Drehpunkt im Zapfen (4) haben, während die oberen Endbereiche besagter Hebel ihren Drehpunkt (16) im oberen Endbereich der Seiten des Parallelepipedförmigen Elements (15) haben; der untere Endbereich des Elements (15) ist ein Ganzes mit der Drehachse, da er seinen Drehpunkt im geformten Lager (18) hat und aktiviert wird vom Hebel (17),
von einem Griff, einem Motor oder einer ähnlichen Einrichtung;
eine kleine Stange (19), die sich gegenüber der senkrechten Achse um ungefähr 45°neigt, die befestigt ist auf dem Zapfen (4), auf dem die gesamte Filterlagerung (2) aufgenommen ist;
eine senkrechte Stütze, die ein Ganzes ist mit der Basis (18), in der Weise positioniert, daß die geneigte Stange (19) während der Bewegung nach unten in Kontakt kommt mit der senkrechten Stütze (20);
ein Lager der Feder auf dem Zapfen (4).

2. Eine Einrichtung gemäß Anspruch 1, die sich durch die Tatsache auszeichnet, daß der Betrieb des Hebels (17) in eine Richtung die Neigung der Arme (13 u.14), die Senkung des Lagers des Filters (2), den Kontrast zwischen der geneigten Stange (19) und der Stütze (20) und die daraus folgende Neigung des Lagers des Filters (2) über die 45° hinaus (gegenüber der Horizontale) verursacht.

3. Einrichtung gemäß Anspruch 1, die sich durch die Tatsache auszeichnet, daß die Feder (5) das Lager des Filters (2) in die horizontale Lage zurückversetzt, sobald kein Kontrast mehr zwischen der geneigten Stange (10) und der Stütze (20) vorliegt.

4. Einrichtung gemäß Anspruch 1, die sich durch die Tatsache auszeichnet, daß sie mit einer Anordnung für die teilweise Extraktion des Filters aus seinem Lager versehen ist, eingegriffen :
ein Zapfen (24), der ein Ganzes ist mit dem unteren Teil des Filters (25), der ein vorstehendes Element (28) aufweist, einen Sitz (26) mit einem oberen vorstehenden Element (27), das den Zapfen (24) aufnimmt,
ein zweiter Zapfen (30), dessen Durchmesser kleiner ist als der des Zapfens (24), der ein Ganzes mit diesem letztgenannten (24) bildet,
ein Unterbrechungsstift (31), der regulierbar auf der Halterung (32) befestigt ist.

5. Einrichtung gemäß Anspruch 4, die sich durch die Tatsache auszeichnet, daß sich der im Sitz (26) bewegende Zapfen (30) - wenn das Lager des Filters (2) die Posizion der maximalen Drehung erreicht - dem Stift (31) widersetzt und eine Verlagerung nach vorn vornimmt, so daß der Filter (25) aus dem Lager des Filters (2) für eine bestimmte Länge austritt.

6. Einrichtung gemäß Anspruch 4, die sich durch die Tatsache auszeichnet, daß der Ausgang des Unterbrechungsstiftes (31) dank des am Schaft befindlichen Gewindes (32) geregelt werden kann.

7. Einrichtung gemäß Anspruch 1, die sich durch die Tatsache auszeichnet, daß der Hebel (17) von einem Motor aktiviert wird.

8. Einrichtung gemäß Anspruch 1, die sich durch die Tatsache auszeichnet, daß der Hebel (17) über einem Griff aktiviert wird.

## Revendications

1. Dispositif d'expulsion automatique de dosettes usées pour alimenter les machines à café et boissons du même genre, qui comprend:
une unité de distribution de la chaleur (1),
un logement de la dosette (2) solidaire de la partie inférieure d'un support cylindrique (2) centré sur l'axe perpendiculaire à travers le centre de l'unité qui contient le filtre (2),
un pivot cylindrique (4) aux angles droits de l'axe vertical qui passe à travers le centre de l'unité qui contient le filtre (2), sur la base duquel est montée solidairement l'unité qui contient le filtre,
un support (6) dont le plateau a une forme carrée,
dans deux bras (7 et 8) comprenant deux encoches pour y faire pénétrer les extrémités du pivot cylindrique (4),les bras (7 et 8) présentant des orifices (9), et **caractérisé par le fait qu'**il comprend aussi:
deux guides verticales (10 et 11) qui passent par les orifices (9) du support (6); les extrémités supérieures de ces guides (10 et 11) sont solidaires du côté inférieur de l'unité de chauffage (1) et les extrémités inférieures de ces guides (10 et 11) sont solidaires de la base (12)
deux manettes (13 e 14), dont les extrémités supérieures ont leur point d'appui dans le pivot (4), tandis que les extrémités inférieures de ces manettes ont leur point d'appui (16) à l'extrémité supérieure des côtés de l'élément en forme de parallélépipède (15);l'extrémité inférieure de l'élément (15) est solidaire de l'axe de rotation dont le point d'appui se trouve dans l'élément profilé (18) et qui est mis en mouvement par la manette (17), une poignée, par un moteur ou autre dispositif semblable;
une petite tige (19) inclinée d'environ 45° par rapport à l'axe vertical, fixée sur le pivot (4) sur lequel est monté solidairement le logement du filtre (2)
un élément profilé vertical (20) solidaire de la base(18) en position telle que la tige inclinée (19) pendant le déplacement vers le bas, entre en contact avec l'élément profilé vertical (20),
un logement du ressort sur le pivot (4).

2. Un dispositif, selon la revendication 1, **caractérisé par le fait que** le fonctionnement de la manette (17) dans une direction provoque une inclinaison des bras (13 et 14), l'abaissement du logement du filtre (2), l'opposition de la tige inclinée (19) et de l'élément vertical (20), avec inclinaison du logement du filtre (2) de plus de 45° sur l'horizontale.

3. Un dispositif, selon la revendication 1, **caractérisé par le fait que** le ressort (5) renvoie en arrière le logement du filtre (2) en position horizontale, dès qu'il n'y a plus opposition de la tige inclinée (19) de l'élément vertical (20).

4. Un dispositif, selon la revendication 1, **caractérisé par le fait qu'**il est muni d'un système d'extraction partielle de la dosette hors du logement du filtre, comprenant:
un pivot (24) solidaire de la partie inférieure du filtre (25)qui présente un élément saillant (28),
un logement (26) présentant un élément saillant supérieur (27) qui accueille le pivot(24),
un ressort (29) introduit dans le pivot (24) entre les éléments saillants (28) et (25),
un deuxième pivot (30) de diamètre inférieur au pivot (24), solidaire de ce pivot (24),
un pivot d'interruption (31) fixé au support (32) et ajustable.

5. Un dispositif, selon la revendication 4, **caractérisé par le fait que** lorsque le logement du filtre (2) atteint la position de rotation maximum, le pivot (30) qui se déplace dans le logement (26) s'oppose au pivot d'interruption (31) et subit un déplacement vers l'avant, de manière que la dosette (25) sorte du logement du filtre (2) sur une longueur fixe.

6. Un dispositif, selon la revendication 4, dans lequel la sortie du pivot d'interruption (31) peut être réglée grâce à un filetage (32) de la tige.

7. Un dispositif, selon la revendication 1, dont la manette (17) est actionnée par un moteur.

8. Un dispositif, selon la revendication 1, dont la manette 17) est actionnée par une poignée.
